# EUROPÄISCHE PATENTANMELDUNG

(11) **EP 4 806 611 A2**
(43) Veröffentlichungstag der Anmeldung: **16.09.2026**
(21) Anmeldenummer: 26162627.9
(22) Anmeldetag: 05.03.2026
(51) Int. Cl.: B28C 5/42

(54) **FAHRMISCHER**

(30) Priorität: 12.03.2025 DE 102025109368; 15.07.2025 DE 102025127818
(71) Anmelder: Stetter GMBH, 87700 Memmingen (DE)
(72) Erfinder: Berger, Thomas, 87452 Altusried (DE)
(74) Vertreter: Schneiders & Behrendt Bochum

(57) **Zusammenfassung**

Die Erfindung betrifft einen Fahrmischer (1) mit einer Mischtrommel (2), einem Antriebsmotor (3) zum Drehantrieb der Mischtrommel (2) und mit einer Bremsvorrichtung (4), wobei die Bremsvorrichtung (4) eine Bremse (5) aufweist, welche dazu vorgesehen ist, eine Drehbewegung der Mischtrommel (2) in einer Schließstellung der Bremse (5) zu unterbinden und in einer Öffnungsstellung der Bremse (5) freizugeben, wobei die Bremse (5) mittels Federkraft und/oder magnetischer Kraft im Schließsinne betätigt wird. Aufgabe der Erfindung ist es, einen verbesserten Fahrmischer anzugeben, der eine alternativ und einfacher aufgebaute, langlebige Bremsvorrichtung bietet. Die Bremsvorrichtung soll eine effektive, fehlerunanfällige und sichere Abbremsung der Mischtrommel ermöglichen. Hierzu schlägt die Erfindung vor, dass die Bremsvorrichtung (4) eine Öffnungshydraulik (6) aufweist, welche die Bremse (5) bei Beaufschlagung mit Hydraulikfluid im Öffnungssinne entgegen der Federkraft und/oder magnetischen Kraft betätigt.

## Beschreibung

Die Erfindung betrifft einen Fahrmischer mit einer Mischtrommel, einem Antriebsmotor zum Drehantrieb der Mischtrommel und mit einer Bremsvorrichtung, wobei die Bremsvorrichtung eine Bremse aufweist, welche dazu vorgesehen ist, eine Drehbewegung der Mischtrommel in einer Schließstellung der Bremse zu unterbinden und in einer Öffnungsstellung der Bremse freizugeben, wobei die Bremse mittels Federkraft und/oder magnetischer Kraft im Schließsinne betätigt wird.

Ein solcher Fahrmischer ist aus DE 10 2019 204 432 A1 bekannt. Nachteilig an der hier beschriebenen Bremsvorrichtung ist ihr aufwendiger Aufbau, der die Verwendung einer elektrischen Speichereinrichtung vorsieht.

Es ist daher Aufgabe der Erfindung einen verbesserten Fahrmischer anzugeben, der eine alternativ und einfacher aufgebaute, langlebige Bremsvorrichtung bietet. Die Bremse soll eine effektive, fehlerunanfällige und sichere Abbremsung der Mischtrommel ermöglichen.

Gelöst wird diese Aufgabe durch einen Fahrmischer mit den Merkmalen des Anspruchs 1.

Dadurch, dass die Bremsvorrichtung eine Öffnungshydraulik aufweist, welche die Bremse bei Beaufschlagung mit Hydraulikfluid im Öffnungssinne entgegen der Federkraft und/oder magnetischen Kraft betätigt, kann ein verbesserter Fahrmischer geschaffen werden, der eine alternativ und einfacher aufgebaute, langlebige Bremsvorrichtung bietet, die eine effektive, fehlerunanfällige und sichere Abbremsung der Mischtrommel ermöglicht. Über die Öffnungshydraulik lässt sich die Bremse der Bremsvorrichtung einfach öffnen, um die Mischtrommel mit dem Antriebsmotor anzutreiben. Kommt es zu einer Abschaltung oder sonstiger Unterbrechung des Drehantriebs der Mischtrommel durch den Antriebsmotor, erfolgt mittels Federkraft und/oder magnetischer Kraft eine Aktivierung der Bremse im Schließsinne, sodass die Mischtrommel nicht unkontrolliert weiter drehen oder schwingen kann. Dies ist von besonderer Bedeutung, wenn der Antriebsmotor des Drehantriebs der Mischtrommel nicht hydraulisch angetrieben wird oder aus anderen Gründen keine ausreichende Selbsthemmung aufweist, um die Drehbewegung der Mischtrommel zu unterbinden. Beim Antrieb der Mischtrommel mit einem Hydraulikmotor stoppt die Drehbewegung hingegen sofort, wenn die Hydraulikölzufuhr zum Hydraulikmotor unterbrochen wird, sodass in der Regel keine Bremsvorrichtung nötig ist. Die hydraulisch betätigbare Bremse zur Kontrolle der Drehbewegungen der Mischtrommel lässt sich einfach durch Beaufschlagung mit Hydraulikfluid gegen die Federkraft und/oder magnetische Kraft öffnen, um eine Drehung der Mischtrommel zu ermöglichen, wobei bei nicht ausreichendem Hydraulikdruck die Bremse durch die Federkraft und/oder die magnetische Kraft schließt und eine unkontrollierte Drehung der Mischtrommel automatisch und sicher verhindert. Die Öffnungshydraulik kann besonders effizient die zur Öffnung der Bremse erforderliche Kraft im Öffnungssinne entgegen der Federkraft und/oder der magnetischen Kraft aufbringen, die die Bremse im Schließsinne betätigt. Als Bremse kann beispielsweise eine hydraulisch angesteuerte Lamellenbremse oder Scheibenbremse vorgesehen sein. Die erforderliche Bremsleistung der Bremse hängt davon ab, ob noch ein langsames Auspendeln der Mischtrommel, das heißt ein Absenken des Schwerpunktes akzeptiert werden kann oder ob die Mischtrommel sofort vollständig zum Stillstand kommen soll.

Vorteilhafte Ausgestaltungen und Weiterbildungen der Erfindung ergeben sich aus den abhängigen Ansprüchen. Es ist darauf hinzuweisen, dass die in den Ansprüchen einzeln aufgeführten Merkmale auch in beliebiger und technologisch sinnvoller Weise miteinander kombiniert werden können und somit weitere Ausgestaltungen der Erfindung aufzeigen.

Gemäß einer vorteilhaften Ausgestaltung der Erfindung ist vorgesehen, dass der Antriebsmotor ein Elektromotor ist. Besonders wenn der Antriebsmotor zur Drehung der Mischtrommel ein Elektromotor ist, bietet sich eine Bremse an, die in einer Schließstellung die Drehbewegung der Mischtrommel unterbindet. Bei Abschaltung oder Unterbrechung der Stromversorgung des Elektromotors kann die Mischtrommel ansonsten frei drehen, was ein erhebliches Unfallrisiko mit sich bringt. Mit der Öffnungshydraulik, die die Bremse gegen die Federkraft und/oder die Magnetkraft öffnet, kann eine einfache und sichere Lösung zur Kontrolle der Drehbewegung der Mischtrommel unabhängig vom elektrischen Antrieb des Antriebsmotors geschaffen werden. Die Bremsvorrichtung mit der Öffnungshydraulik funktioniert unabhängig von der Elektronik des Fahrmischers, was eine zusätzliche Sicherheit bietet.

Besonders bevorzugt ist eine Ausführungsform, die vorsieht, dass die Öffnungshydraulik einen Hydraulikspeicher aufweist, der hydraulische Energie zur Betätigung der Bremse im Öffnungssinne bereitstellt. Mit dem Hydraulikspeicher kann die hydraulische Energie zur Öffnung der Bremse konstanter und länger zur Verfügung gestellt werden. So kann bei Aktivierung des Antriebsmotors noch im Hydraulikspeicher gespeicherte hydraulische Energie zur Betätigung der Bremse im Öffnungssinne bereitstellt werden. Bei der Abschaltung des Antriebsmotors wird der Hydraulikdruck aus der Bremse gelassen und die Bremse damit automatisch geschlossen. Hydraulische Energie bleibt zur späteren Betätigung der Bremse im Öffnungssinne im Hydraulikspeicher gespeichert. Eine besonders vorteilhafte Ausführung der Erfindung bezieht sich darauf, dass die Öffnungshydraulik eine Hydraulikpumpe aufweist, die den Hydraulikspeicher mit hydraulischer Energie auflädt. Über die Hydraulikpumpe der Öffnungshydraulik kann ausreichend hydraulische Energie zur Öffnung der Bremse in dem Hydraulikspeicher gespeichert werden.

Eine besonders vorteilhafte Ausführung der Erfindung sieht vor, dass die Hydraulikpumpe von dem Antriebsmotor angetrieben ist. So wird bei der Drehung der Mischtrommel gleichzeitig über die Hydraulikpumpe der Hydraulikspeicher mit hydraulischer Energie aufgeladen. So steht die hydraulische Energie im Hydraulikspeicher noch zur Öffnung der Bremse zur Verfügung, wenn die Bremse die Drehung der Mischtrommel bei Abschaltung des Antriebsmotors unterbunden hat.

Eine vorteilhafte Ausführung der Erfindung sieht vor, dass die Hydraulikpumpe vom Antriebsmotor über einen Nebenabtrieb eines Trommelgetriebes des Fahrmischers angetrieben ist. Trommelgetriebe mit Nebenabtrieb sind bereits für andere Zwecke erhältlich, sodass die vorgeschlagene Antriebsanordnung der Hydraulikpumpe einfach umzusetzen ist. Alternativ zu dieser Ausgestaltung kann die Hydraulikpumpe auch direkt vom Antriebsmotor angetrieben sein. So kann die Hydraulikpumpe beispielsweise auf der Antriebswelle des Antriebsmotors angeordnet sein.

Besonders vorteilhaft ist eine Ausführungsform, die vorsieht, dass die Hydraulikpumpe von einem weiteren Antriebsmotor angetrieben ist. Der Antrieb der Hydraulikpumpe über einen vom Drehantrieb der Mischtrommel unabhängigen, weiteren Antriebsmotor ermöglicht einen effizienteren Einsatz der Hydraulikpumpe, weil der Hydraulikspeicher für die Bremse nur noch dann aufgefüllt wird, wenn der Druck im Hydraulikspeicher nicht mehr für die Bremsenbetätigung ausreicht.

Eine vorteilhafte Ausgestaltung sieht vor, dass es sich bei dem weiteren Antriebsmotor um einen weiteren Elektromotor handelt. Die Verwendung eines weiteren Elektromotors als weiteren Antriebsmotor ermöglicht einen vollelektrischen Antrieb des Aufbaus des Fahrmischers, so dass eine Be- und Entladung der Mischtrommel ohne umweltschädliche Emissionen und ohne den Lärm eines Verbrennungsmotor möglich ist, falls das Fahrgestell des Fahrmischers nicht auch über einen elektrischen Antrieb verfügt. Die Antriebsbatterie für den LKW-Antrieb oder für den Trommelantrieb kann zudem gemeinsam genutzt werden.

Gemäß einer bevorzugten Ausgestaltung der Erfindung ist vorgesehen, dass die Bremsvorrichtung eine Pumpensteuerung aufweist, welche dazu eingerichtet ist, den weiteren Antriebsmotor zu aktivieren, wenn ein über einen Drucksensor der Öffnungshydraulik erfasster Hydraulikdruck im Hydraulikspeicher abfällt. Durch die Pumpensteuerung ist ein besonders effizienter Einsatz der Hydraulikpumpe möglich, da diese nur bei Bedarf betrieben wird.

Besonders vorteilhaft ist eine Ausführungsform, die vorsieht, dass die Hydraulikpumpe als drehrichtungsunabhängige Membranpumpe ausgeführt ist. Die Membranpumpe ermöglicht die Förderung von Hydraulikfluid in einer von der Drehrichtung der Mischtrommel unabhängigen Effizienz. So kann die Hydraulikpumpe beim Befüllen und Entleeren der Mischtrommel gleichermaßen effizient Hydraulikfluid fördern.

Weiter vorteilhaft ist eine Ausführungsform, bei der die Bremse von einer Notbetätigungsvorrichtung von der Schließstellung in die Öffnungsstellung betätigbar ist. Die Notbetätigungsvorrichtung stellt sicher, dass die Bremse in die Öffnungsstellung gebracht werden kann, falls beispielsweise die Öffnungshydraulik nicht den erforderlichen Hydraulikdruck für das Öffnen der Bremse aufbringen kann. Dies kann beispielsweise auch der Fall sein, wenn dem weiteren Antriebsmotor nicht ausreichend Energie für die Betätigung der Hydraulikpumpe zur Verfügung steht.

Weitere Merkmale, Einzelheiten und Vorteile der Erfindung ergeben sich aufgrund der nachfolgenden Beschreibung sowie anhand der Zeichnungen, die Ausführungsbeispiele der Erfindung zeigen. Einander entsprechende Gegenstände oder Elemente sind in allen Figuren mit den gleichen Bezugszeichen versehen. Es zeigen schematisch:
- Figur 1: einen erfindungsgemäßen Fahrmischer,
- Figur 2: einen weiteren erfindungsgemäßen Fahrmischer,
- Figur 3: einen weiteren erfindungsgemäßen Fahrmischer,
- Figur 4: einen weiteren erfindungsgemäßen Fahrmischer.

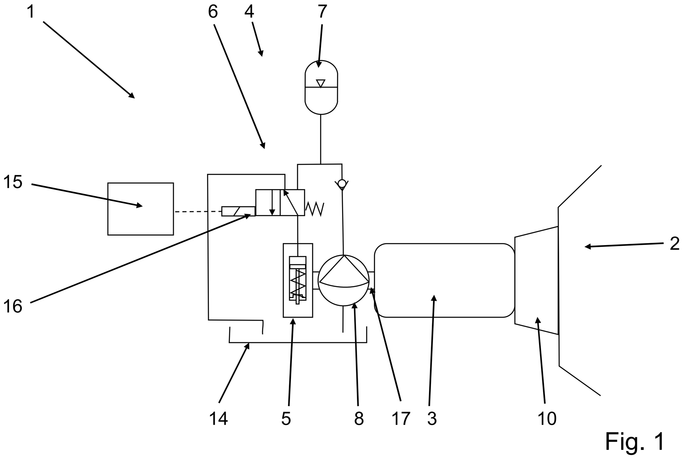

In den Figuren 1 bis 3 mit dem Bezugszeichen 1 bezeichnet ist jeweils ein erfindungsgemäßer Fahrmischer schematisch dargestellt. Der Fahrmischer 1 verfügt über eine Mischtrommel 2 zum Transport von flüssigem Beton zu einer Baustelle. Außerdem weist der Fahrmischer 1 einen Antriebsmotor 3 auf, der zum Drehantrieb der Mischtrommel 2 vorgesehen ist. Ferner ist an dem Fahrmischer 1 eine Bremsvorrichtung 4 vorgesehen, die eine Bremse 5 aufweist, welche dazu eingerichtet ist, eine Drehbewegung der Mischtrommel 2 in einer Schließstellung der Bremse 5 zu unterbinden. So dient die Bremse 5 als Feststellbremse für die Mischtrommel 2, wenn der Antriebsmotor 3 die Mischtrommel 2 nicht rotiert. Damit der Antriebsmotor die Mischtrommel 2 drehen kann, wird die Bremse 5 im Öffnungssinne betätigt. So wird die Drehbewegung der Mischtrommel 2 in einer Öffnungsstellung der Bremse 5 freigegeben. Mittels einer Federkraft und/oder einer magnetischer Kraft kann die Bremse 5 im Schließsinne automatisch betätigt werden, um die Drehbewegung der Mischtrommel 2 zu unterbinden. Die Bremsvorrichtung 4 weist erfindungsgemäß eine Öffnungshydraulik 6 auf, welche die Bremse 5 bei Beaufschlagung mit Hydraulikfluid im Öffnungssinne entgegen der Federkraft und/oder magnetischen Kraft betätigt. So kann ein verbesserter Fahrmischer 1 realisiert werden, der eine alternative, einfachere und langlebigere Bremsvorrichtung 4 bietet, die ein effektives, fehlerunanfälliges und sicheres Abbremsen der Mischtrommel 2 ermöglicht. Durch die Öffnungshydraulik 6 kann die Bremse 5 der Bremsvorrichtung 4 leicht geöffnet werden, um die Mischtrommel 2 mit dem Antriebsmotor 3 anzutreiben. Bei Abschalten oder sonstiger Unterbrechung des Drehantriebes der Mischtrommel 2 durch den Antriebsmotor 3 wird die Bremse 5 mittels Federkraft und/oder Magnetkraft in Schließrichtung betätigt, so dass die Mischtrommel 2 nicht unkontrolliert weiterdrehen oder (aufgrund der durch den in der Mischtrommel befindlichen Beton gegebenen Lastverteilung) pendeln kann. Dies ist insbesondere wichtig, wenn der Antriebsmotor 3 für den Drehantrieb der Mischtrommel 2 nicht hydraulisch angetrieben wird oder aus anderen Gründen keine ausreichende Selbsthemmung bietet, um die Drehbewegung der Mischtrommel 2 zu unterbinden.

Bei den in den Figuren 1 bis 3 dargestellten Ausführungen ist der Antriebsmotor 3 elektrisch. Mit der Öffnungshydraulik 6, die die Bremse 5 gegen die Federkraft und/oder die Magnetkraft öffnet, kann eine einfache und sichere Lösung geschaffen werden, um die Drehbewegung der Mischtrommel 2 unabhängig vom elektrischen Antrieb des Antriebsmotors 3 zu unterbinden. Die hydraulisch betätigte Bremse 5 lässt sich einfach durch Beaufschlagung mit Hydraulikfluid gegen die Federkraft und/oder die Magnetkraft öffnen, um eine Drehung der Mischtrommel 2 zu ermöglichen. Bei nicht ausreichendem Hydraulikdruck schließt die Bremse 5 durch die Federkraft und/oder die Magnetkraft und eine unkontrollierte Drehung der Mischtrommel 2 kann verhindert werden. Die Öffnungshydraulik 6 kann die zum Öffnen der Bremse 5 erforderliche Kraft besonders effizient aufbringen. Die Bremsvorrichtung 4 mit der Öffnungshydraulik 6 arbeitet unabhängig von der Elektronik des Fahrmischers 1, was zusätzliche Sicherheit bietet.

Die Öffnungshydraulik 6 des Fahrmischers 1 gemäß den Figuren 1 bis 3 weist einen Hydraulikspeicher 7 auf, der hydraulische Energie zur Betätigung der Bremse 5 im Öffnungssinn bereitstellt. Durch den Hydraulikspeicher 7 kann die hydraulische Energie zum Öffnen der Bremse 5 konstanter und länger zur Verfügung gestellt werden. Hierdurch kann beim Einschalten des Antriebsmotors 3 einfach die im Hydraulikspeicher 7 gespeicherte hydraulische Energie zur Betätigung der Bremse 5 im Öffnungssinne zur Verfügung gestellt werden. Beim Abschalten des Antriebsmotors 3 wird die Bremse 5 automatisch geschlossen und die hydraulische Energie bleibt im Hydraulikspeicher 7 für eine spätere Betätigung der Bremse 5 im Öffnungssinn gespeichert. Bei der Abschaltung des Antriebsmotors 3 wird der Hydraulikdruck in Richtung eines Hydrauliktanks 14 des Fahrmischers 1 aus der Bremse 5 gelassen und die Bremse 5 damit automatisch geschlossen. Zur Drehung der Mischtrommel 2 wird von der Steuerung 15 des Fahrmischers 1 ein Hydraulikventil 16 des Fahrmischers 1 betätigt, so dass durch den Hydraulikdruck aus dem Hydraulikspeicher 7 die Bremse 5 geöffnet wird. Sobald die Mischtrommel 2 steht oder anhalten soll, wird das Hydraulikventil 16 umgeschaltet und der Hydraulikdruck, der die Bremse 5 geöffnet hat, in den Hydrauliktank 14 abgelassen, und die Bremse 5 schließt. Nur wenn die Steuerung 15 des Fahrmischers 1 das Hydraulikventil 16 betätigt, wird die Bremse 5 geöffnet. Ohne Ansteuerung des Hydraulikventils 16 wird der Ventilkörper des Hydraulikventils 16 durch eine Federkraft in die in den Figuren 1 bis 3 gezeigte Stellung gedrückt, wodurch die Bremse 5 die Mischtrommel 2 bremst. Solange die Steuerung 15 des Fahrmischers 1 das Hydraulikventil 16 mit Spannung beaufschlagt, ist die Bremse 5 hingegen geöffnet und die Mischtrommel 2 kann vom Antriebsmotor 3 gedreht werden. Eine Federkraft im Hydraulikventil 16 drückt den Ventilkörper automatisch nach links, wenn die Steuerung 15 des Fahrmischers 1 kein Signal an das Hydraulikventils 16 gibt. Hierdurch fällt die Bremse 5 ein und bremst die Mischtrommel 2 automatisch.

Die Öffnungshydraulik 6 umfasst in den Ausführungen gemäß der Figuren 1 bis 3 vorteilhafterweise eine Hydraulikpumpe 8 zum Laden des Hydraulikspeichers 7 mit hydraulischer Energie. Die Hydraulikpumpe 8 der Öffnungshydraulik 6 sorgt für genügend hydraulische Energie zum Öffnen der Bremse 5, welche in dem Hydraulikspeicher 7 gespeichert wird. So kann in dem Hydraulikspeicher 7 ausreichend hydraulische Energie gespeichert werden, um die Bremse 5 wenigstens einmal zu öffnen. In allen Ausführungen kann die Hydraulikpumpe 8 als drehrichtungsunabhängige Membranpumpe ausgeführt sein.

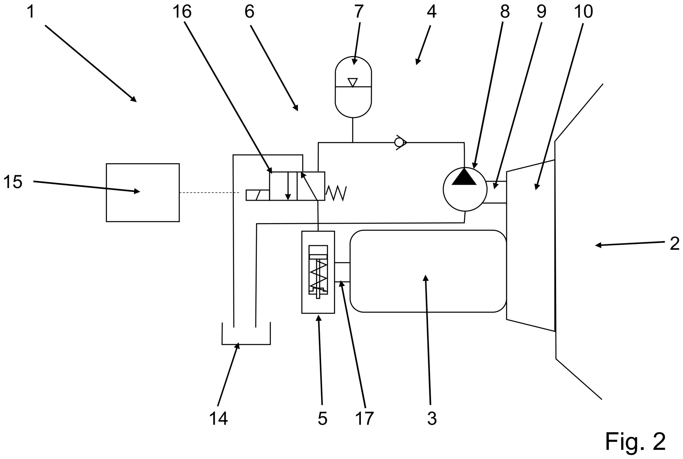

Mit der Membranpumpe kann das Hydraulikfluid in den Ausführungen gemäß der Figuren 1 und 2 auch unabhängig von der Drehrichtung der Mischtrommel 2 gefördert werden. Dadurch ist die Hydraulikpumpe 8 in der Lage, sowohl beim Befüllen als auch beim Entleeren der Mischtrommel 2 das Hydraulikfluid mit gleichem Wirkungsgrad zu fördern.

In den Ausführungen gemäß der Figuren 1 und 2 wird die Hydraulikpumpe 8 von dem Antriebsmotor 3 angetrieben. Es ist also kein unabhängiger Antrieb der Hydraulikpumpe 8 nötig, was Gewicht des Fahrmischers 1 spart.

Die Hydraulikpumpe 8 kann direkt vom Antriebsmotor 3 angetrieben sein, wie bei der Ausführung in Figur 1 dargestellt. So kann die Hydraulikpumpe 8 beispielsweise auf der Antriebswelle 17 des Antriebsmotors 3 angeordnet sein.

Bei der Ausführung gemäß Figur 2 wird die Hydraulikpumpe 8 vom Antriebsmotor 3 über einen Nebenabtrieb 9 eines Trommelgetriebes 10 des Fahrmischers 1 angetrieben. Das Trommelgetriebe 10 dient zur Übersetzung zwischen dem Antriebsmotor 3 und der durch den Antriebsmotor 3 zur Rotation angetriebenen Mischtrommel 2. Die Anordnung der Hydraulikpumpe 8 am Nebenabtrieb 9 des Trommelgetriebes 10 lässt sich sehr einfach umsetzen.

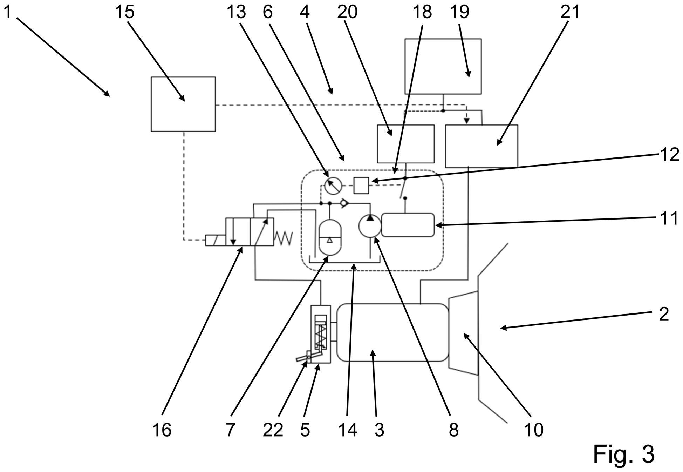

Mit der Ausführung gemäß Figur 3 ist ein Fahrmischer 1 gezeigt, bei dem die Hydraulikpumpe 8 von einem weiteren Antriebsmotor 11 angetrieben ist. Hierdurch lässt sich die Hydraulikpumpe 8 unabhängig vom Antriebsmotor 3 zur Drehung der Mischtrommel antreiben. Bei dem weiteren Antriebsmotor 11 handelt es sich bevorzugt um einen weiteren Elektromotor. Die Bremsvorrichtung 4 gemäß Figur 3 weist eine Pumpensteuerung 12 auf, welche dazu dient, den weiteren Antriebsmotor 11 nur zu aktivieren, wenn ein über einen Drucksensor 13 der Öffnungshydraulik 6 erfasster Hydraulikdruck im Hydraulikspeicher 7 abfällt. Die Pumpensteuerung ermöglicht so einen besonders effizienten Einsatz der Hydraulikpumpe 8, da diese nur bei Bedarf betrieben wird.

Der Fahrmischer 1 kann eine integrierte Montageeinheit 18 aufweisen, die bevorzugt umfasst: den Hydraulikspeicher 7, die Hydraulikpumpe 8, den weiteren Antriebsmotor 11, die Pumpensteuerung 12, den Drucksensor 13 und/oder den Hydrauliktank 14. Hierdurch entfällt eine aufwendige Integration der Öffnungshydraulik 6 in den Antriebsstrang der Mischtrommel 2. Der Antriebsmotor 3 zum Drehantrieb der Mischtrommel 2 wird, wie auch der weitere, elektrische Antriebsmotor 11 vom gleichen Akkumulator 19 des Fahrmischers 1 mit elektrischer Leistung versorgt. Hierdurch ist keine autonome vom Trommelantrieb 3 unabhängige Stromversorgung für den weiteren elektrischen Antriebsmotor 11 nötig. Kommt im Fahrmischer 1 eine Hochvoltbatterie als Akkumulator 19 zur Versorgung des Drehantriebs 3 der Mischtrommel 2 zum Einsatz, kann auch ein DC/DC Wandler 20 am Fahrmischer 1 vorgesehen sein, um den weiteren Antriebsmotor 11 mit der passenden Spannung über den Akkumulator 19 zu versorgen. Zwischen der Hochvoltbatterie als Akkumulator 19 und dem Antriebsmotor 3 zum Drehantrieb der Mischtrommel 2 kann auch ein Inverter oder eine Motorsteuerung 21 des Fahrmischers 1 vorgesehen sein.

In der Figur 3 ist zusätzlich zu der Öffnungshydraulik 6 eine Notbetätigungsvorrichtung 22 dargestellt, die dazu geeignet ist die Bremse 5 von der Schließstellung in die Öffnungsstellung zu betätigen. Die Notbetätigungseinrichtung 22 ist hier beispielhaft in Form eines Handhebels 22 dargestellt, mit der die Bremse geöffnet werden kann, falls die Öffnungshydraulik 6 die Bremse nicht betätigen kann, beispielsweise wegen eines Defekts der Hydraulik oder eines entleerten Akkumulators 19.

Als Notbetätigungsvorrichtung 22 wäre beispielsweise auch ein Zugang zu der Hydraulikleitung zwischen dem Hydraulikventil 16 und der Bremse 5 geeignet, über den der für die Öffnung der Bremse 5 notwendige hydraulische Druck in das Hydrauliksystem eingebracht werden kann. Alternativ könnte beispielsweise eine hydraulische Handpumpe als Notbetätigungsvorrichtung 22 zwischen dem Hydraulikventil 16 und dem Hydraulikspeicher 7 angeordnet sein, die dazu geeignet ist, Hydraulikdruck im Hydraulikspeicher 7 aufzubauen oder mit der der Hydraulikdruck direkt zur Öffnung der Bremse 5 erzeugt wird.

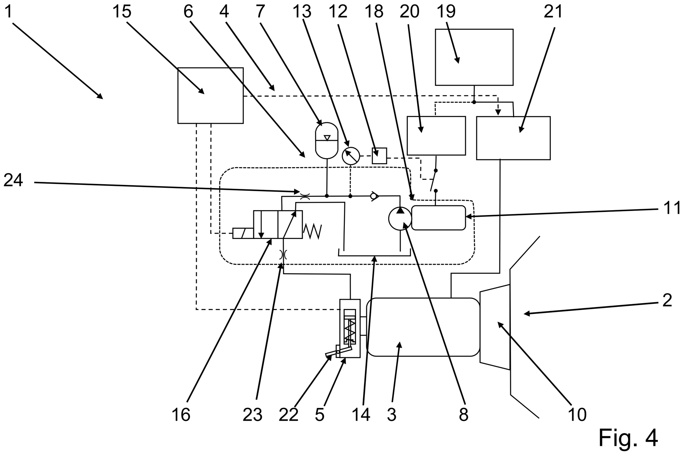

Mit der Ausführung gemäß Figur 4 ist ein Fahrmischer 1 gezeigt, bei dem die Hydraulikpumpe 8 von einem weiteren Antriebsmotor 11 angetrieben ist. Hierdurch lässt sich die Hydraulikpumpe 8 unabhängig vom Antriebsmotor 3 zur Drehung der Mischtrommel antreiben. Bei dem weiteren Antriebsmotor 11 handelt es sich bevorzugt um einen weiteren Elektromotor. Die Bremsvorrichtung 4 gemäß Figur 4 weist eine Pumpensteuerung 12 auf, welche dazu dient, den weiteren Antriebsmotor 11 nur zu aktivieren, wenn ein über einen Drucksensor 13 der Öffnungshydraulik 6 erfasster Hydraulikdruck im Hydraulikspeicher 7 abfällt. Die Pumpensteuerung ermöglicht so einen besonders effizienten Einsatz der Hydraulikpumpe 8, da diese nur bei Bedarf betrieben wird.

Der Fahrmischer 1 kann eine integrierte Montageeinheit 18 aufweisen, die bevorzugt umfasst: den Hydraulikspeicher 7, die Hydraulikpumpe 8, den weiteren Antriebsmotor 11, die Pumpensteuerung 12, den Drucksensor 13 und/oder den Hydrauliktank 14. Hierdurch entfällt eine aufwendige Integration der Öffnungshydraulik 6 in den Antriebsstrang der Mischtrommel 2. Der Antriebsmotor 3 zum Drehantrieb der Mischtrommel 2 wird, wie auch der weitere, elektrische Antriebsmotor 11 vom gleichen Akkumulator 19 des Fahrmischers 1 mit elektrischer Leistung versorgt. Hierdurch ist keine autonome vom Trommelantrieb 3 unabhängige Stromversorgung für den weiteren elektrischen Antriebsmotor 11 nötig. Kommt im Fahrmischer 1 eine Hochvoltbatterie als Akkumulator 19 zur Versorgung des Drehantriebs 3 der Mischtrommel 2 zum Einsatz, kann auch ein DC/DC Wandler 20 am Fahrmischer 1 vorgesehen sein, um den weiteren Antriebsmotor 11 mit der passenden Spannung über den Akkumulator 19 zu versorgen. Zwischen der Hochvoltbatterie als Akkumulator 19 und dem Antriebsmotor 3 zum Drehantrieb der Mischtrommel 2 kann auch ein Inverter oder eine Motorsteuerung 21 des Fahrmischers 1 vorgesehen sein.

In Figur 4 ist zusätzlich zu der Öffnungshydraulik 6 eine Notbetätigungsvorrichtung 22 dargestellt, die dazu geeignet ist die Bremse 5 von der Schließstellung in die Öffnungsstellung zu betätigen. Die Notbetätigungseinrichtung 22 ist hier beispielhaft in Form eines Handhebels 22 dargestellt, mit der die Bremse geöffnet werden kann, falls die Öffnungshydraulik 6 die Bremse nicht betätigen kann, beispielsweise wegen eines Defekts der Hydraulik oder eines entleerten Akkumulators 19.

Als Notbetätigungsvorrichtung 22 wäre beispielsweise auch ein Zugang zu der Hydraulikleitung zwischen dem Hydraulikventil 16 und der Bremse 5 geeignet, über den der für die Öffnung der Bremse 5 notwendige hydraulische Druck in das Hydrauliksystem eingebracht werden kann. Alternativ könnte beispielsweise eine hydraulische Handpumpe als Notbetätigungsvorrichtung 22 zwischen dem Hydraulikventil 16 und dem Hydraulikspeicher 7 angeordnet sein, die dazu geeignet ist, Hydraulikdruck im Hydraulikspeicher 7 aufzubauen oder mit der der Hydraulikdruck direkt zur Öffnung der Bremse 5 erzeugt wird. In dem Ausführungsbeispiel gemäß Figur 4 sind zudem Drosseln 23, 24 gezeigt. Diese Drosseln 23, 24 sorgen dafür, dass die Bremse 5 nicht schlagartig beaufschlagt und/oder entladen wird. Eine erste Drossel 23 kann zwischen der Bremse 5 und dem Hydraulikventil 16 vorgesehen sein. Eine zweite Drossel 24 kann zwischen dem Hydraulikventil 16 und der Hydraulikpumpe 8 vorgesehen sein.

### Bezugszeichenliste

- 1: Fahrmischer
- 2: Mischtrommel
- 3: Antriebsmotor
- 4: Bremsvorrichtung
- 5: Bremse
- 6: Öffnungshydraulik
- 7: Hydraulikspeicher
- 8: Hydraulikpumpe
- 9: Nebenabtrieb
- 10: Trommelgetriebe
- 11: Weiterer Antriebsmotor
- 12: Pumpensteuerung
- 13: Drucksensor
- 14: Hydrauliktank
- 15: Steuerung
- 16: Hydraulikventil
- 17: Antriebswelle
- 18: Montageeinheit
- 19: Akkumulator
- 20: DC/DC Wandler
- 21: Inverter/Motorsteuerung
- 22: Notbetätigungsvorrichtung
- 23: Erste Drossel
- 24: Zweite Drossel

## Patentansprüche

1. Fahrmischer (1) mit einer Mischtrommel (2), einem Antriebsmotor (3) zum Drehantrieb der Mischtrommel (2) und mit einer Bremsvorrichtung (4), wobei die Bremsvorrichtung (4) eine Bremse (5) aufweist, welche dazu vorgesehen ist, eine Drehbewegung der Mischtrommel (2) in einer Schließstellung der Bremse (5) zu unterbinden und in einer Öffnungsstellung der Bremse (5) freizugeben, wobei die Bremse (5) mittels Federkraft und/oder magnetischer Kraft im Schließsinne betätigt wird,
**dadurch gekennzeichnet,**
**dass** die Bremsvorrichtung (4) eine Öffnungshydraulik (6) aufweist, welche die Bremse (5) bei Beaufschlagung mit Hydraulikfluid im Öffnungssinne entgegen der Federkraft und/oder magnetischen Kraft betätigt.

2. Fahrmischer (1) nach Anspruch 1, **dadurch gekennzeichnet, dass** der Antriebsmotor (3) ein Elektromotor ist.

3. Fahrmischer (1) nach Anspruch 1 oder 2, **dadurch gekennzeichnet, dass** die Öffnungshydraulik (6) einen Hydraulikspeicher (7) aufweist, der hydraulische Energie zur Betätigung der Bremse (5) im Öffnungssinne bereitstellt.

4. Fahrmischer (1) nach Anspruch 3, **dadurch gekennzeichnet, dass** die Öffnungshydraulik (6) eine Hydraulikpumpe (8) aufweist, die den Hydraulikspeicher (7) mit hydraulischer Energie auflädt.

5. Fahrmischer (1) nach Anspruch 4, **dadurch gekennzeichnet, dass** die Hydraulikpumpe (8) von dem Antriebsmotor (3) angetrieben ist.

6. Fahrmischer (1) nach Anspruch 5 **dadurch gekennzeichnet, dass** die Hydraulikpumpe (8) vom Antriebsmotor (3) über einen Nebenabtrieb (9) eines Trommelgetriebes (10) des Fahrmischers (1) angetrieben ist.

7. Fahrmischer (1) nach Anspruch 4, **dadurch gekennzeichnet, dass** die Hydraulikpumpe (8) von einem weiteren Antriebsmotor (11) angetrieben ist.

8. Fahrmischer (1) nach Anspruch 7, **dadurch gekennzeichnet, dass** es sich bei dem weiteren Antriebsmotor (11) um einen weiteren Elektromotor handelt.

9. Fahrmischer (1) nach Anspruch 7 oder 8, **dadurch gekennzeichnet, dass** die Bremsvorrichtung (4) eine Pumpensteuerung (12) aufweist, welche dazu eingerichtet ist, den weiteren Antriebsmotor (11) zu aktivieren, wenn ein über einen Drucksensor (13) der Öffnungshydraulik (6) erfasster Hydraulikdruck im Hydraulikspeicher (7) abfällt.

10. Fahrmischer (1) nach einem der Ansprüche 4 bis 9, **dadurch gekennzeichnet, dass** die Hydraulikpumpe (8) als drehrichtungsunabhängige Membranpumpe ausgeführt ist.

11. Fahrmischer (1) nach einem der vorhergehenden Ansprüche, **dadurch gekennzeichnet, dass** die Bremse (5) von einer Notbetätigungsvorrichtung (22) von der Schließstellung in die Öffnungsstellung betätigbar ist.
